# EUROPÄISCHE PATENTSCHRIFT

(11) **EP 0 611 400 B1**
(45) Veröffentlichungstag und Bekanntmachung des Hinweises auf die Patenterteilung: **18.10.1995**
(21) Anmeldenummer: 92922211.5
(22) Anmeldetag: 28.10.1992
(51) Int. Cl.: C23G 1/00, G01N 13/02

(54) **VERFAHREN ZUM ENTFETTEN UND REINIGEN METALLISCHER OBERFLÄCHEN**
PROCESS FOR DEGREASING AND CLEANING METAL SURFACES
PROCEDE DE DEGRAISSAGE ET DE NETTOYAGE DE SURFACES METALLIQUES

(30) Priorität: 06.11.1991 DE 4136442
(43) Veröffentlichungstag der Anmeldung: 24.08.1994
(73) Patentinhaber: Henkel Kommanditgesellschaft auf Aktien, 40191 Düsseldorf (DE)
(72) Erfinder: MÜLLER-KIRSCHBAUM, Thomas, D-5650 Solingen 19 (DE); HATER, Wolfgang, D-4000 Düsseldorf 1 (DE); KNAPP, Dieter, D-4000 Düsseldorf 12 (DE); VIENENKÖTTER, Thomas, D-4300 Essen 14 (DE)
(86) Internationale Anmeldenummer: EP9202462
(87) Internationale Veröffentlichungsnummer: WO9309269

(56) Entgegenhaltungen:
- EP-A- 0 149 500
- EP-A- 0 264 867
- DE-A- 3 424 711
- US-A- 3 150 518
- JOURNAL OF APPLIED SCIENCE, Bd. 28, 1983, Seiten 407-430; SCHORK, RAY: "on-line measurement...emulsion polymerization"

## Beschreibung

Die Erfindung betrifft ein Verfahren zum Entfetten und Reinigen metallischer Oberflächen mit tensidhaltiger wäßriger Reinigungsflüssigkeit in Bädern und/oder mittels Spritzreinigung und gegebenenfalls mit nachfolgendem Spülen der entfetteten und gereinigten Oberflächen. Bei der Spritzreinigung wird üblicherweise die Reinigungsflüssigkeit umgewälzt.

Metallische Teile, z. B. Bleche, müssen nach der mechanischen Bearbeitung und vor einer anschließenden Oberflächenbehandlung, beispielsweise der Galvanisierung, von Rückständen an der Oberfläche befreit werden. Außer kleinen Metallpartikeln müssen vornehmlich Fette und Öle natürlichen oder mineralischen Ursprungs entfernt werden, die als Bohr- und Schneidhilfsmittel oder als Gleitverbesserer bei vorangegangenen Bearbeitungsschritten verwendet wurden.

Die Oberfläche wird von den Verschmutzungen, vor allem von den Fetten und Ölen, typischerweise in wäßrigen Reinigungsbädern, die i. a. tensidische Komponenten, z. B. nichtionische Tenside enthalten, gesäubert. Dabei werden sowohl Tauch- als auch Spritzverfahren eingesetzt. Eine Zusammenstellung der üblichen Reinigungsmittel, auch Reiniger genannt, ist z. B. bei J. Kresse et al., "Säuberung technischer Oberflächen", Kontakt & Studium, Bd. 264, Expert Verlag angegeben.

Mit zunehmender Anschmutzung der Reinigungsbäder nimmt die Reinigungsleistung ab. Außerdem wird ein Teil der Reinigungsflüssigkeit durch die zu reinigenden Teile ausgeschleppt. Ab einer bestimmten Badbelastung ist die geforderte Reinigungsleistung nicht mehr gewährleistet. Durch Badpflegemaßnahmen wird versucht, die ursprünglichen Reinigungseigenschaften des Bades aufrecht zu erhalten. Dies erfolgt zum einen durch Nachdosieren des kompletten Reinigungsmittels oder einzelner Komponenten und zum anderen durch Entfernen der Verschmutzungen aus den Reinigungsflüssigkeiten. Übliche Verfahren zur Abtrennung öliger Badverschmutzungen werden u. a. mit Skimmern, Separatoren, Ölabscheidern, Zentrifugen, Verdampfern oder Membrantechniken, z. B. Mikro- oder Ultrafiltration, durchgeführt.

Aufgrund der Wechselwirkungen der Badverschmutzungen und der Abtrenneinrichtungen mit den Reinigerinhaltsstoffen wird hierbei neben den Verunreinigungen jedoch auch ein Teil der Reinigerkomponenten mit aus der Lösung entfernt, so daß ein Nachdosieren der entsprechenden Komponenten erforderlich wird, um die gewünschte Reinigungswirkung zu gewährleisten.

Von entscheidender Bedeutung für Badpflegemaßnahmen ist die Überwachung der Reinigungsbäder, d. h. die Messung der Badbelastung und der noch vorliegenden Reinigungsreserve. Einerseits soll nämlich der optimale Zeitpunkt für den Badwechsel eingehalten werden. Er liegt vor, wenn die belastete Reinigungsflüssigkeit beim nächsten Reinigungsvorgang kein ausreichendes Reinigungsergebnis mehr liefern würde. Andererseits soll nach einer Abtrennung der Badverschmutzungen nur die Menge des Reinigungsmittels bzw. deren Komponenten nachdosiert werden, um die gewünschte Reinigungswirkung zu erzielen. Ein Überdosieren soll vermieden werden.

Mit den üblichen Meßmethoden ist die Kontrolle der Reinigungswirkung der Bäder nur in unzureichender Weise möglich. Die Messung der Leitfähigkeit und des pH-Wertes oder die Titration erfassen im wesentlichen nur die anorganischen Komponenten. Diese Methoden sind daher nur für salzhaltige Reiniger anwendbar. Ein weiterer Nachteil dieser Meßverfahren ist, daß das Tensidsystem nicht erfaßt wird.

Die Bestimmungen des CSB-Wertes (chemischer Sauerstoffbedarf) oder des TOC-Wertes (gesamt-oxidierbarer Kohlenstoff) erfaßt neben den Tensiden auch alle übrigen organischen Badinhaltsstoffe, z. B. ölhaltige Belastungen, so daß dieses Verfahren nur in ausgewählten Fällen brauchbar ist.

Die chemische Analyse der Reinigungsbäder, bzw. auch die Bestimmung einzelner Tenside und Tensidklassen, z. B. Kohlenwasserstoffbestimmung, BIAS- oder MBAS-Methode, erfordert die Anwesenheit von ausgebildetem Fachpersonal. Außerdem sind die Untersuchungen zeit- und damit kostenaufwendig.

Die Bestimmung der Restbefettung auf dem Reinigungsgut bzw. auf Prüfkörpern durch Verbrennung des kohlenstoffhaltigen Materials bei erhöhten Temperaturen bedarf eines erheblichen apparativen Aufwandes. Ferner ist der Zeitaufwand für eine Messung so groß, daß eine On-line-Kontrolle des Reinigungsbades kaum möglich ist und somit keine Gelegenheit besteht, in den Reinigungsprozeß regelnd einzugreifen. Außerdem ist nur in einigen Fällen eine eindeutige Korrelation zwischen Restverschmutzung und Reinigungswirkung gegeben, so daß das Bestimmungsverfahren keine generelle Anwendung findet.

Trübungsmessungen besitzen gleichfalls Nachteile, die einer universellen Anwendung im Wege stehen. So werden sie z. B. durch Emulsionsbildung stark gestört und verlieren an Aussagekraft.

Aufgrund der Schwierigkeiten bei der analytischen Überwachung der Reinigungsbäder erfolgt die Kontrolle häufig über die Qualität der nachgeschalteten Bearbeitungsschritte, z. B. die Qualität einer auf den Metalloberflächen elektrolytisch abgeschiedenen Metallschicht. Die Nachteile dieser Vorgehensweise sind offensichtlich, da hier im Falle des Nichtgelingens eine große Menge an Ausschuß produziert wird.

Für viele nachfolgende Bearbeitungsschritte, z. B. Galvanisierung muß die metallische Oberfläche frei von Fetten und Ölen sein. Häufig wird die Benetzbarkeit der Oberfläche mit Wasser als Maß für die Qualität des Reinigungsschrittes herangezogen. Die Überprüfung der Benetzbarkeit ist aber nicht universell einsetzbar, da bestimmte Reiniger, insbesondere Neutralreiniger, aufgrund der speziellen Formulierung wasserabweisende Oberflächen auf dem Reinigungsgut erzeugen. Außerdem ist die Meßmethode nur bei einfacher Teilegeometrie, z. B. bei ebenen Blechen anwendbar. Zusätzlich läßt das Verfahren eine differenzierte Beurteilung des Zustandes des Reinigungsbades nicht zu.

Aus der US-A-3 150 518 ist bekannt, den Tensidgehalt von Reinigungslösungen durch Messung der Oberflächenspannung zu bestimmen. Hierzu mißt man die Kraft, die erforderlich ist, um einen zwischen zwei Trägern ausgespannten Flüssigkeitsfilm zu dehnen.

Die großen Schwierigkeiten der Überwachung tensidhaltiger Reinigungsbäder führen dazu, daß meist zu viel und zu früh nachdosiert und zu früh ein Badwechsel vorgenommen wird. Neben unnötigen Kosten fallen auch große Abwassermengen an, deren Verringerung aus ökologischer und ökonomischer Sicht anzustreben ist.

Der Erfindung liegt daher die Aufgabe zugrunde, ein Verfahren der eingangs genannten Art bereitzustellen, das auf eine wirtschaftliche und schnelle Weise eine genaue Messung der Badbelastung und der Reinigungsreserve erlaubt, so daß ein genaueres Nachdosieren des Reinigungsmittels sowie eine Verringerung des Spülwasserbedarfs ermöglicht wird. Damit sollen die Zahl der Badwechsel und Aufarbeitungsschritte, der Reinigungsbedarf und die Abwassermenge bei gleichbleibender oder verbesserter Reinigungsqualität verringert werden. Das Verfahren soll ferner universell einsetzbar sein. Es soll on-line und kontinuierlich zu betreiben sein, so daß es in kurzer Zeit aktuelle Meßergebnisse liefert und für eine automatische Regelung, z. B. eine automatisch geregelte Nachdosierung geeignet ist. Eine sehr wichtige Forderung liegt darin, daß die Messung eine Größe liefern soll, die sehr viel stärker als bei den bekannten Verfahren mit dem gewünschten Wert, nämlich der Badbelastung, der Reinigungsreserve und der Qualität des nachfolgenden Bearbeitungsschrittes, beispielsweise der Lackierbarkeit und der Galvanisierbarkeit korreliert ist. Bei der Reinigungsreserve handelt es sich im wesentlichen um das Verhältnis zwischen Reinigungsmittel und Verschmutzungen im Reinigungsbad.

Diese Aufgabe wird erfindungsgemäß dadurch gelöst, daß man als Maß für die aktuelle Reinigungsreserve der Reinigungsflüssigkeit einen mit der dynamischen Oberflächenspannung korrelierten Wert mit einem Blasentensiometer mißt, das mit hinreichend konstanten Gasströmen, insbesondere Luftströmen, betrieben wird, die Meßwerte mit einem vorgegebenen Sollwert vergleicht, den man mittels einer Eichung für das verwendete Reinigungsmittel erhalten hat, und in Abhängigkeit vom Vergleichsergebnis Pflegemaßnahmen für die Reinigungsflüssigkeit, insbesondere deren Aufarbeitung und/oder eine Nachdosierung des Reinigungsmittels durchführt. Übliche Einrichtungen zur Badpflege im Sinne der vorliegenden Erfindung sind u. a. Skimmer, Separatoren, Ölabscheider, Zentrifugen, Verdampfer oder Membrantechniken. Unter dem Begriff Pflegemaßnahmen kann man verstehen, das Verhältnis zwischen Reinigungsmittel und Verschmutzungen im Bad zu erhöhen.

Überraschenderweise hat sich nämlich gezeigt, daß die mit einem Blasentensiometer erhaltenen Meßwerte bei unterschiedlichsten Reinigungssystemen einen sehr eng mit der Reinigungsreserve korrelierten Wert liefern, so daß eine sehr viel genauere Überwachung tensidhaltiger Reinigungsbäder möglich ist.

Verfahren zur Messung der statischen Oberflächenspannung, z. B. Ringmethode oder Wilhelmy-Verfahren versagen hier wegen der Verschmutzungen und der Heterogenität des belasteten Reinigungsbades. Die damit erhaltenen Meßwerte sind zur Bestimmung der Reinigungsreserve und der Badbelastung nicht brauchbar.

Eine besonders gute Auflösung des Meßsignals erreicht man, wenn man die Messung an einer auf eine Temperatur von 20 bis 60°C, insbesondere von etwa 40°C, abgekühlten Probe der Reinigungsflüssigkeit vornimmt. Eine weitere Verbesserung des Auflösungsvermögens wird erreicht, wenn man die Messung an einer mit Wasser im Verhältnis bis zu 1 : 10, insbesondere im Verhältnis von 1 : 0,5 bis 1 : 2, verdünnten Probe der Reinigungsflüssigkeit vornimmt. Verfahrenstechnisch lassen sich diese Verbesserungen des Auflösungsvermögens besonders günstig realisieren, wenn man die Messung in einem Seitenstrom vornimmt, dem Wasser von solcher Temperatur und in solcher Menge zugemischt wird, daß die für die Messung gewünschte Abkühlung und Verdünnung erreicht wird.

Bei der Regenerierung des Reinigungsbades wird der darin enthaltene Ölanteil oft mittels Membranfiltration, insbesondere Ultrafiltration abgetrennt. Dieses Aufarbeitungsverfahren ist besonders günstig, weil üblicherweise mehr als 95 % des Ölanteils entfernt wird. Das ölfreie Permeat kann für ein neuen Reinigungszyklus verwendet werden. Allerdings werden von der Filtrationsmembran nicht nur die Ölanteile, sondern auch ein Teil der im Reinigungsbad enthaltenen Tenside zurückgehalten. Die Menge der zurückgehaltenen Tenside hängt von vielen Parametern ab und schwankt daher. Eine Nachdosierung des Reinigungsmittels oder einzelner Reinigungsmittelkomponenten ist also erforderlich. Da bisher der Tensidgehalt im Permeat nur ungenau bestimmt werden konnte, kam es aus Sicherheitsgründen durchweg zu Überdosierungen. In einer erfindungsgemäßen Ausgestaltung wird daher vorgeschlagen, daß man die verschmutzte Reinigungsflüssigkeit mit einem der üblichen Verfahren, z. B. Ultrafiltration aufarbeitet, die dynamische Oberflächenspannung der behandelten Lösung, im Falle der Ultrafiltration also des Permeats, mißt, entsprechend dem Meßergebnis die tensidischen Reinigungskomponenten in das Permeat, insbesondere während einer kontinuierlichen Messung, nachdosiert und die erhaltene regenerierte Reinigungsflüssigkeit weiterverwendet.

In einer anderen Ausgestaltung der Erfindung wird ein sehr viel besseres Kriterium für die Galvanisierbarkeit von entfetteten metallischen Oberflächen dadurch erhalten, daß man während der Entfettung/Reinigung von in einem nachfolgenden Schritt zu galvanisierenden metallischen Oberflächen kontinuierlich die dynamische Oberflächenspannung der Reinigungsflüssigkeit mißt und bei Überschreiten eines vorgegebenen Meßwerts Pflegemaßnahmen für die Reinigungsflüssigkeit, insbesondere dessen Wechsel, durchführt. Erfindungsgemäß ist die Ermittlung der Galvanisierbarkeit im Gegensatz zu bekannten Verfahren sehr genau möglich.

Das erfindungsgemäße Verfahren läßt sich allerdings auch zur Zubereitung frischer Reinigungslösungen einsetzen. Auch darin zeigt sich die breite Anwendbarkeit des erfindungsgemäßen Verfahrens. Hier wird das Reinigungsmittel entsprechend dem aktuellen Wert der gemessenen dynamischen Oberflächenspannung dosiert.

Aber auch zur Einsparung von Zeit und Spülwasser in einem nachfolgendem Spülgang läßt sich das erfindungsgemäße Verfahren durchführen. Hier mißt man die dynamische Oberflächenspannung des Spülwassers und beendet das Ausspülen, wenn der Meßwert einen vorgegebenen Maximalwert überschreitet.

Bei der Ermittlung der Oberflächenspannung kann auf zwei unterschiedliche Arten vorgegangen werden. Zum einen kann der maximale Blasendifferenzdruck der mit dem Blasentensiometer erzeugten Blasen gemessen werden. Zum anderen kann die zeitliche Rate der aus dem Blasentensiometer strömenden Blasen gemessen werden. Die konstanten Gasströme können durch Regulieren variabler Gasströme oder mittels gleichmäßig arbeitender Pumpen erzeugt werden.

Die Erfindung betrifft nicht nur das bisher genannte Verfahren, sondern auch eine Vorrichtung zum Durchführen dieses Verfahrens. Die erfindungsgemäße Aufgabe wird in dieser Vorrichtung dadurch gelöst, daß an konstante Gasstromquellen angeschlossene und in die Waschflüssigkeit mit gleicher Tiefe eintauchende Kapillaren vorgesehen sind, die mit einer Einrichtung zum Erfassen des Drucks oder der Druckänderungsfrequenz verbunden sind, die über eine Auswerteeinheit eine Anzeige und/oder eine Einrichtung zum insbesondere selbsttätigen Durchführen von Pflegemaßnahmen für die Reinigungsflüssigkeit steuert.

Um die Menge an. Ausspülwasser zu reduzieren, wird in dieser erfindungsgemäßen Vorrichtung vorgeschlagen, daß die Auswerteeinheit mit einem das Ausspülen betätigenden Steuerteil verbunden ist.

Nachfolgend werden Ergebnisse und Ausführungsbeispiele der Erfindung anhand von Zeichnungen näher erläutert.

Es zeigen
- Figur 1: eine schematische Darstellung eines Meßaufbaus,
- Figur 2: Ergebnisse zur Korrelation zwischen den Meßwerten und der Reinigungsreserve,
- Figur 3: Ergebnisse zur Korrelation zwischen den Meßwerten und der Badbelastung,
- Figur 4: die Abhängigkeit der Auflösung von Temperatur und Verdünnung der Reinigungslösung,
- Figur 5: die Korrelation der erfindungsgemäßen Meßwerte und der Benetzbarkeit mit der Galvanisierbarkeit und
- Figur 6: die Korrelation der erfindungsgemäßen Meßwerte, des pH-Werts und der Leifähigkeit mit der Reinigungsreserve vor und nach der Badregenerierung.

Das in der Erfindung eingesetzte Blasentensiometer ist an sich bekannt und z. B. von F. J. Schork und W. H. Rey in "Journal of Applied Polymer Science", Vol. 28, 1983, Seiten 407 bis 430 beschrieben und soll daher an dieser Stelle nur kurz erläutert werden.

Das Blasen-Tensiometer ist geeignet, dynamische Oberflächenspannungen zu messen. Mit dieser Methode können auch oberhalb der kritischen Mizellbildungskonzentration Unterschiede im Ausgangssignal festgestellt werden, wenn sich die Tensidkonzentration ändert. Als Ausgangssignale, die direkt mit der dynamischen Oberflächenspannung und deshalb mit der Tensidkonzentration verknüpft werden können, eignen sich z. B. die Blasenfrequenz und der maximale Blasendruck.

Wird nicht mit einer, sondern mit zwei Kapillaren, die unterschiedlich weite Öffnungen haben, gearbeitet, so ist insbesondere der maximale Blasendifferenzdruck zwischen den beiden Kapillaren als Meßsignal verwendbar. Mit fallender dynamischer Oberflächenspannung nimmt auch der Differenzdruck ab.

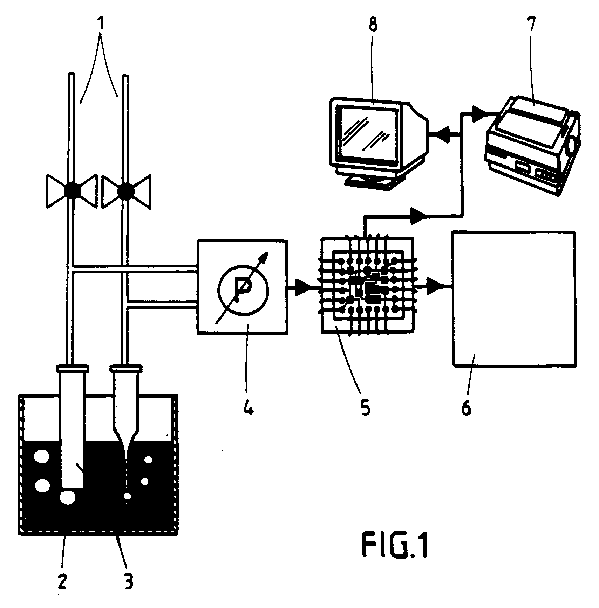

Einen typischen Aufbau eines Blasen-Tensiometers zeigt Fig. 1. Über die geregelten Luftströme wird unter definierten Druck- und Volumenverhältnissen Luft 1 in die Lösung 2 eingeleitet, die in Form von Blasen aus den unteren Enden der Kapillaren 3 entweicht. Mit einer elektronischen Differenzdruckmessung 4 wird ein elektrisch weiterverarbeitbares Signal erzeugt, das in eine zentrale Recheneinheit 5, beispielsweise einen Personal-Computer oder eine andere zur Prozeßsteuerung geeignete elektronische Vorrichtung übertragen wird. Abhängig von der Über- oder Unterschreitung vorgewählter Grenzwerte durch das aufgearbeitete Meßsignal werden von einer Steuereinheit 6 Regelschritte wie Nachdosierung, Anzeige der Erschöpfung der Reinigungsleistung, Aufarbeitung, Ende der Nachdosierung sowie alle weiteren Maßnahmen veranlaßt, die zur Aufrechterhaltung der Reinigungseigenschaften des Metallreinigungsbades notwendig sind. Zur Datenausgabe sind ferner ein Drucker 7 und ein Monitor 8 vorgesehen.

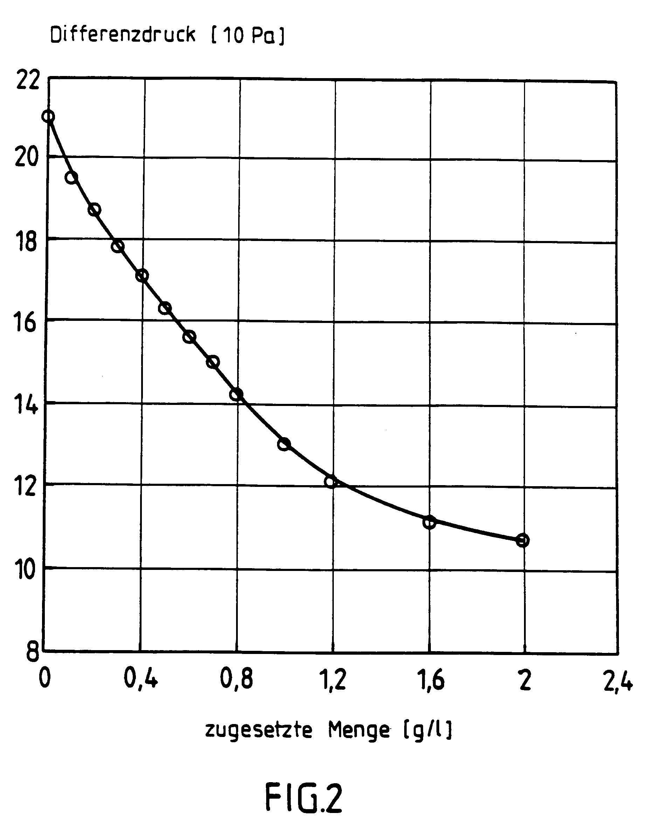

Figur 2 zeigt beispielhaft, wie mit steigender Konzentration einer für die Spritzreinigung verwendeten Zubereitung der mit dem Blasentensiometer gemessene Differenzdruck abnimmt. Die Daten wurden an dem nach einer Regenerierung einer verbrauchten Reinigungslösung durch Ultrafiltration gewonnenen Permeat aufgenommen. Auf der Abszisse ist nicht die absolute, sondern die zusätzlich zugegebene Menge der Tensid-Komponente aufgetragen. Die gute Korrelation und Auflösung ist offensichtlich.

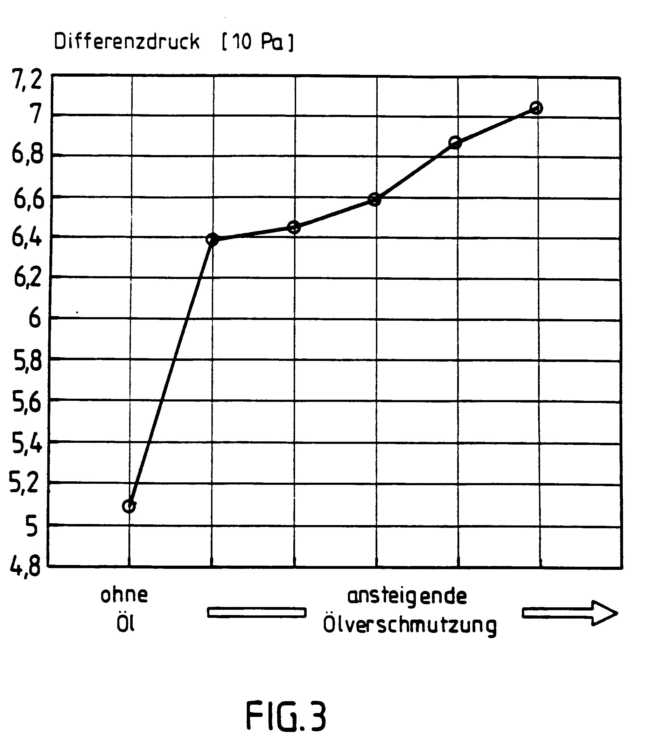

Figur 3 zeigt, wie mit steigendem Gehalt eines badbelastenden Bearbeitungsöles der Differenzdruck zunimmt, wenn gleichzeitig die Konzentration des eingesetzten alkalischen Tauchbadreinigers konstant gehalten wird.

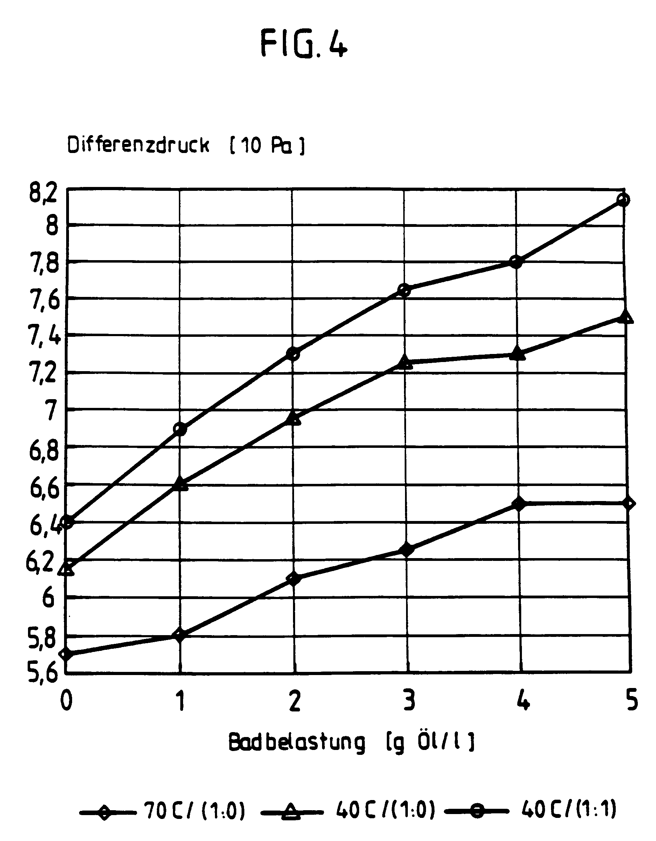

Es wurde eine grundsätzliche Verfahrensverbesserung gefunden, die zu einer deutlich besseren Auflösung der Signaldifferenzen beiträgt. Dies kann am Beispiel eines salzfreien Tauchbadreinigers gezeigt werden. Wird die Messung unter den Temperatur- und Konzentrationsbedingungen des Reinigungsbades durchgeführt, so findet die Untersuchung typischerweise bei 70 bis 80°C in der konzentrierten Lösung statt. Ein unter diesen Umständen registriertes Signal für steigende Anschmutzungen zeigt Figur 4 (untere Kurve). Wird jedoch die Badlösung bei einer tieferen Temperatur, z. B. etwa 40°C, vermessen, so ist die Abhängigkeit des Meßsignals von der Badverschmutzung wesentlich deutlicher (Figur 4, mittlere Kurve). Eine weitere Verbesserung wird erreicht, wenn zusätzlich eine Verdünnung stattfindet.

Als verfahrenstechnisch und meßtechnisch besonders günstig hat sich eine Verdünnung von etwa 1 : 1 erwiesen, die, wenn sie mit kaltem Leitungswasser von etwa 10°C ausgeführt wird, gleichzeitig eine Temperaturabsenkung auf 40°C bewirkt und somit durch einen einzigen verfahrenstechnisch einfach auszuführenden Schritt in Form einer Seitenstromentnahme bei etwa massengleichem Zufluß von Leitungswasser zu einer besonders starken Verbesserung der Auflösung der Meßwerte führt (Figur 4, obere Kurve).

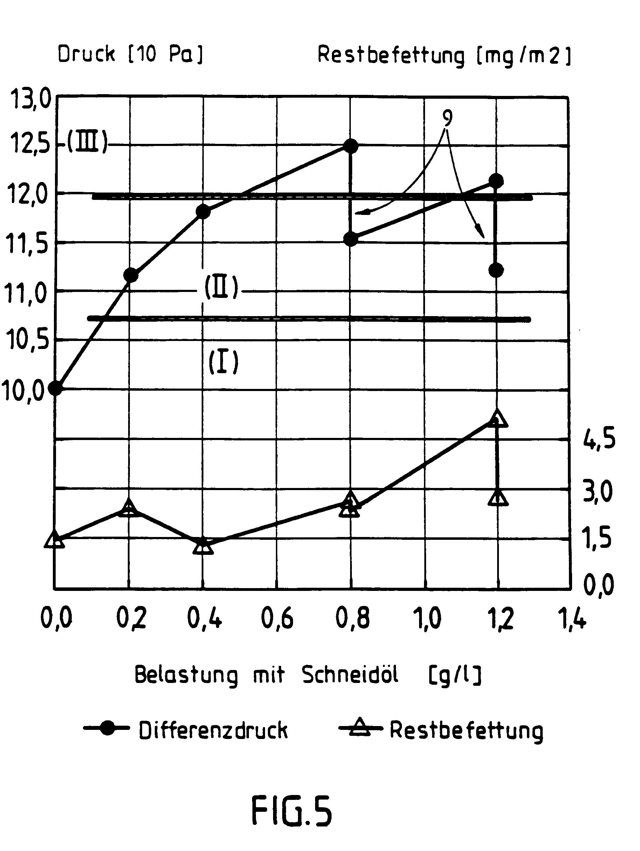

Figur 5 zeigt beispielhaft am Fall der Reinigung von Messingblechen mit einem alkalischen Tauchreiniger von Verunreinigungen durch ein handelsübliches Schneidöl vor dem Galvanisieren, daß mit der späteren Vernickelbarkeit nur der Signalverlauf des Blasentensiometers eindeutig korreliert. Andere Parameter zeigen dabei keine eindeutige Korrelation mit der Vernickelbarkeit, die das Ziel der Reinigung ist.

In diesem Beispiel (Figur 5) steigt die Badbelastung auf 0,8 g/l Öl bei zunächst konstanter Reinigerkonzentration von 40 g/l an. Dann wird 10 g/l Reiniger nachdosiert. Im Anschluß wird die Badbelastung erneut angehoben bis auf 1,2 g/l. Als letzter Schritt werden nochmals 10 g/l Reiniger nachdosiert. Das Meßsignal des Blasen-Tensiometers folgt exakt der sich erhöhenden Badbelastung und zeigt einen deutlichen und nahezu gleichen Ausschlag nach unten für beide Nachdosierungsschritte 9. (Höhere Tensidkonzentration entspricht kleinerer dynamischer Oberflächenspannung und damit kleinerem Differenzdruck). Dabei wurde bei 40°C und einem Verdünnungsverhältnis von 1 : 1 (Lösung: Wasserzusatz) gemessen.

Der praxisrelevante Parameter ist die Vernickelbarkeit der gereinigten Messingbleche. Sie liegt in Bereichen I und II von Figur 5 vor, aber nicht in Bereich III. Unter Vernickelbarkeit wird hier das Aufbringen einer gut haftenden Nickelschicht mit einwandfreiem Erscheinungsbild durch elektrolytische Abscheidung verstanden. Während sich für den Meßwerteverlauf mit dem Blasentensiometer ein eindeutiger Zusammenhang zwischen Vernickelbarkeit und Höhe des Meßsignals ergibt, ist es mit den anderen beiden Prüfparameter nicht möglich, Aussagen über eine mögliche Vernickelbarkeit der Bleche vorherzubestimmen. Die Benetzbarkeit der Bleche ist nur in Bereich I, aber nicht in den Bereichen II und III gegeben. Sie ist also schon bei der geringsten Badbelastung nicht mehr vorhanden, obwohl ein Vernickeln noch möglich ist.

Der Kurvenverlauf der Restbefettung (untere Kurve in Figur 5) kann ebenfalls nicht zur Beurteilung der Vernickelbarkeit herangezogen werden, da z. B. die Nachdosierungen nicht in jedem Fall eine Änderung der Restbefettung bewirken, aber dennoch zur Wiederherstellung der Reinigungsleistung genügen und eine spätere Vernickelung der Bleche ermöglichen.

Mit dem Blasentensiometer jedoch läßt sich eindeutig der gesamte beispielhafte Vorgang der zunehmenden Badbelastung und Nachdosierung in drei Bereich einteilen, die durch unterschiedliche Druckdifferenzgrenzen voneinander getrennt sind.

Im Bereich I (Figur 5) liegt sowohl Benetzbarkeit als auch Vernickelbarkeit vor. Im Bereich II, unterhalb von etwa 120 Pa Differenzdruck ist in diesem Beispiel keine Benetzbarkeit mehr feststellbar, aber dennoch die ausschlaggebende Eigenschaft der Vernickelbarkeit erhalten geblieben. Oberhalb der Grenze von 120 Pa - im Bereich III - reicht die Reinigungsleistung des Bades offensichtlich nicht mehr aus, die Bleche können nicht mehr vernickelt werden. Durch die beiden Nachdosierschritte kann diese Eigenschaft jedoch wiederhergestellt werden. Gleichzeitig registriert das Blasentensiometer ein Absinken des Meßwertes unter die 120 Pa - Grenze in den Bereich II hinein.

Aufgrund der direkten Korrelation kann sowohl die Erkennung der zu großen Badbelastung als auch die Steuerung der Nachdosierung mit Hilfe des Blasentensiometers erfolgen, ohne daß dazu andere Verfahren notwendig sind.

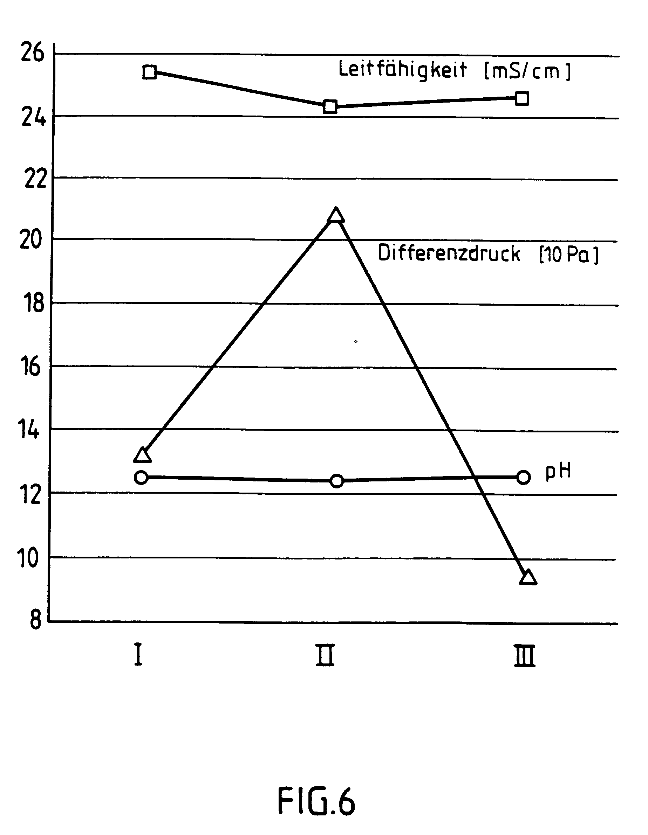

Wie die Aufbereitung einer Reinigerlösung mit Hilfe eines Ultrafiltrationsschrittes durch den Einsatz des Blasentensiometers gesteuert werden kann, wird am Beispiel eines alkalischen Spritzreinigers gezeigt. In Figur 6 sind die mit dem Blasentensiometer gemessenen Differenzdrücke als Balken gezeigt, die sich für die unbelastete Reinigerlösung (Bereich I), die belastete Lösung nach der Ultrafiltration (Bereich II) und im Anschluß an eine Nachdosierung durch ausschließliche Zugabe der tensidischen Reinigerkomponente (Bereich III) (hier 4 g Tensidkomponente/l) ergeben. Dabei sind sowohl die Originallösung als auch die mit nachdosiertem Tensid versehene Lösung zur Reinigung geeignet, während die ultrafiltrierte Lösung keine ausreichenden Reinigungseigenschaften besitzt. Die Messung der Leitfähigkeit (obere Kurve) bzw. des pH-Wertes (untere Kurve) ergibt für die drei Lösungen in etwa konstante Werte und besitzt daher keine Aussagekraft.

Erfindungsgemäß ist daher ein geeignetes Meßverfahren - vor allem gemeinsam mit dem speziellen Verdünnungs- und Abkühlverfahren - gefunden, das verfahrenstechnisch einfach entweder direkt im Reinigerbad oder besser noch im Seitenstrom unter Zumischung kalten Wassers durchführbar ist. Dabei ist es alleine oder in Kombination mit anderen Verfahren - z. B. Leitfähigkeits-, pH-Wert-Messung oder Titration - dazu geeignet, einerseits die Belastung der Reinigerlösung durch Verschmutzungen, vornehmlich Ölanschmutzungen, festzustellen, andererseits durch Messung der Badbelastung eine Steuerung der unmittelbaren Dosierung von Reiniger in die Lösung oder eine Steuerung des Beginns und Endes notwendiger Aufarbeitungsschritte für die Reinigerlösung einschließlich einer Nachdosierung des kompletten Reinigers oder seiner tensidischen Komponenten zu gewährleisten. Das Meßsignal des Blasentensiometers gestattet nämlich unmittelbare Rückschlüsse auf die Einhaltung der geforderten Anwendungseigenschaften, wie z. B. Vernickelbarkeit gereinigter Bleche.

## Patentansprüche

1. Verfahren zum Entfetten und Reinigen metallischer Oberflächen mit tensidhaltiger wäßriger Reinigungsflüssigkeit in Bädern und/oder mittels Spritzreinigung und gegebenenfalls mit nachfolgendem Spülen der entfetteten und gereinigten Oberflächen,
**dadurch gekennzeichnet**,
daß man als Maß für die aktuelle Reinigungsreserve der Reinigungsflüssigkeit einen mit der dynamischen Oberflächenspannung korrelierten Wert mit einem Blasentensiometer mißt, das mit hinreichend konstanten Gasströmen betrieben wird, die Meßwerte mit einem vorgegebenen Sollwert vergleicht, den man mittels einer Eichung für das verwendete Reinigungsmittel erhalten hat, und in Abhängigkeit vom Vergleichsergebnis Pflegemaßnahmen für die Reinigungsflüssigkeit durchführt.

2. Verfahren nach Anspruch 1,
**dadurch gekennzeichnet**,
daß man die Messung an einer auf eine Temperatur von 20 bis 60°C abgekühlten Probe der Reinigungsflüssigkeit vornimmt.

3. Verfahren nach Anspruch 1 oder 2,
**dadurch gekennzeichnet**,
daß man die Messung an einer mit Wasser im Verhältnis bis zu 1 : 10 verdünnten Probe der Reinigungsflüssigkeit vornimmt.

4. Verfahren nach Anspruch 3,
**dadurch gekennzeichnet**,
daß man die Messung an einer mit Wasser im Verhältnis von 1 : 0,5 bis 1 : 2 verdünnten Probe der Reinigungsflüssigkeit vornimmt.

5. Verfahren nach einem der Ansprüche 2 bis 4,
**dadurch gekennzeichnet**,
daß man die Messung in einem Seitenstrom vornimmt, dem Wasser von solcher Temperatur und in solcher Menge zugemischt wird, daß die für die Messung gewünschte Abkühlung und Verdünnung erreicht wird.

6. Verfahren nach einem der Ansprüche 1 bis 5,
**dadurch gekennzeichnet**,
daß man die verschmutzte Reinigungsflüssigkeit mit einem der üblichen Verfahren aufarbeitet, die dynamische Oberflächenspannung der behandelten Losung mißt, entsprechend dem Meßergebnis die tensidischen Reinigungskomponenten in die behandelte Lösung nachdosiert und die erhaltene regenerierte Reinigungsflüssigkeit weiterverwendet.

7. Verfahren nach Anspruch 6,
**dadurch gekennzeichnet**,
daß man zur Aufarbeitung eine Membranfiltration vornimmt.

8. Verfahren nach Anspruch 7,
**dadurch gekennzeichnet**,
daß man als Membranfiltration eine Ultrafiltration vornimmt.

9. Verfahren nach einem der Ansprüche 1 bis 8,
**dadurch gekennzeichnet**,
daß man während der Entfettung/Reinigung von in einem nachfolgenden Schritt zu galvanisierenden metallischen Oberflächen kontinuierlich die dynamische Oberflächenspannung der Reinigungsflüssigkeit mißt und bei Überschreiten eines vorgegebenen Meßwertes Pflegemaßnahmen für die Reinigungsflüssigkeit durchführt.

10. Verfahren nach einem der Ansprüche 1 bis 5,
**dadurch gekennzeichnet**,
daß man zur Zubereitung frischer Reinigungslösung das Reinigungsmittel entsprechend dem aktuellen Wert der gemessenen dynamischen Oberflächenspannung dosiert.

11. Verfahren nach einem der Ansprüche 1 bis 10,
**dadurch gekennzeichnet**,
daß man in einem der Reinigung/Entfettung nachfolgenden Spülgang die dynamische Oberflächenspanung des Spülwassers mißt und das Ausspülen beendet, wenn der Meßwert einen vorgegebenen Maximalwert überschreitet.

12. Verfahren nach einem der Ansprüche 1 bis 11,
**dadurch gekennzeichnet**,
daß zur Ermittlung der Oberflächenspannung der maximale Blasendifferenzdruck der mit dem Blasentensiometer erzeugten Blasen gemessen wird.

13. Verfahren nach einem der Ansprüche 1 bis 11,
**dadurch gekennzeichnet**,
daß zur Ermittlung der Oberflächenspannung die zeitliche Rate der aus dem Blasentensiometer strömenden Blasen gemessen wird.

14. Verfahren nach einem der Ansprüche 1 bis 13,
**dadurch gekennzeichnet**,
daß die konstanten Gasströme durch Regulieren variabler Gasströme oder mittels gleichmäßig arbeitender Pumpen erzeugt werden.

15. Verfahren nach Anspruch 14,
**dadurch gekennzeichnet**,
daß es sich bei den Gasströmen um Luftströme handelt.

## Claims

1. A process for degreasing and cleaning metal surfaces using surfactant-containing water-based cleaning liquids in baths and/or by spray cleaning, optionally followed by rinsing of the degreased and cleaned surfaces, characterized in that, as a measure of the actual cleaning reserve of the cleaning liquid, a value correlated with the dynamic surface tension is measured with a bubble tensiometer which is operated with sufficiently constant gas streams, the results obtained are compared with a preset value obtained by calibration for the cleaning preparation used and servicing measures for the cleaning liquid are carried out in dependence upon the outcome of this comparison.

2. A process as claimed in claim 1, characterized in that the measurement is carried out on a sample of the cleaning liquid cooled to a temperature of 20 to 60°C.

3. A process as claimed in claim 1 or 2, characterized in that the measurement is carried out on a sample of the cleaning liquid diluted with water in a ratio of up to 1:10.

4. A process as claimed in claim 3, characterized in that the measurement is carried out on a sample of the cleaning liquid diluted with water in a ratio of 1:0.5 to 1:2.

5. A process as claimed in any of claims 2 to 4, characterized in that the measurement is carried out in a sidestream to which water is added at such a temperature and in such a quantity that the cooling and dilution required for the measurement are obtained.

6. A process as claimed in any of claims 1 to 5, characterized in that the soiled cleaning liquid is regenerated by one of the usual methods, the dynamic surface tension of the treated solution is measured, the surface-active cleaning components are introduced into the treated solution in accordance with the result of the measurement and the regenerated cleaning liquid obtained is reused.

7. A process as claimed in claim 6, characterized in that membrane filtration is used for regeneration.

8. A process as claimed in claim 7, characterized in that ultrafiltration is carried out as the membrane filtration.

9. A process as claimed in any of claims 1 to 8, characterized in that, during the degreasing/cleaning of metal surfaces to be electroplated in a following step, the dynamic surface tension of the cleaning liquid is continuously measured and servicing measures for the cleaning liquid are carried out whenever a particular set value is exceeded.

10. A process as claimed in any of claims 1 to 5, characterized in that, to prepare fresh cleaning solution, the cleaning preparation is dosed in accordance with the actual value of the measured dynamic surface tension.

11. A process as claimed in any of claims 1 to 10, characterized in that, in a rinse cycle following the cleaning/degreasing step, the dynamic surface tension of the rinsing water is measured and the rinse cycle is terminated when the measured value exceeds a preset maximum value.

12. A process as claimed in any of claims 1 to 11, characterized in that, to determine surface tension, the maximum pressure difference between the bubbles produced with the bubble tensiometer is measured.

13. A process as claimed in any of claims 1 to 11, characterized in that, to determine surface tension, the flow rate of the bubbles issuing from the bubble tensiometer is measured.

14. A process as claimed in any of claims 1 to 13, characterized in that the constant gas streams are produced by regulating variable gas streams or by using uniformly operating pumps.

15. A process as claimed in claim 14, characterized in that the gas streams are air streams.

## Revendications

1. Procédé de dégraissage et de nettoyage de surfaces métalliques avec un liquide de nettoyage aqueux contenant des agents tensioactifs dans des bains et/ou à l'aide d'un nettoyage par pulvérisation et le cas échéant avec rinçage subséquent des surfaces dégraissées et nettoyées, caractérisé en ce que l'on effectue la mesure en tant que mesure de la réserve actuelle de nettoyage du liquide de nettoyage, d'une valeur corrélée à la tension superficielle dynamique avec un tensiomètre à bulles, qui fonctionne avec des courants gazeux suffisamment constants, que l'on compare les valeurs de mesure avec une valeur théorique pré-indiquée, que l'on a obtenue à l'aide d'un étalonnage pour l'agent de nettoyage utilisé, et que l'on effectue en fonction du résultat de comparaison, des mesures de conservation pour le liquide de nettoyage.

2. Procédé selon la revendication 1, caractérisé en ce que l'on effectue la mesure sur un échantillon de liquide de nettoyage refroidi à une température allant de 20 à 60°C.

3. Procédé selon la revendication 1 ou 2, caractérisé en ce que l'on effectue la mesure sur un échantillon de liquide de nettoyage dilué dans le rapport allant jusqu'à 1:10.

4. Procédé selon la revendication 3, caractérisé en ce que l'on effectue la mesure sur un échantillon dilué à l'eau dans le rapport de 1:0,5 à 1:2.

5. Procédé selon l'une des revendications 2 à 4, caractérisé en ce que l'on effectue la mesure dans un courant latéral, auquel on mélange de l'eau à une température telle et en une quantité telle que l'on atteint le refroidissement et la dilution désirés pour la mesure.

6. Procédé selon l'une des revendications 1 à 5, caractérisé en ce que l'on traite le liquide de nettoyage souillé avec un des procédés habituels, que l'on mesure la tension superficielle dynamique de la solution traitée, qu'en fonction du résultat de mesure on procède à l'admission dosée ultérieure dans la solution traitée de composants de nettoyage à base d'agents tensioactifs et qu'on réutilise le liquide de nettoyage obtenu, régénéré.

7. Procédé selon la revendication 6, caractérisé en ce que l'on effectue en vue de la purification une filtration sur membrane.

8. Procédé selon la revendication 7, caractérisé en ce que l'on effectue comme filtration sur membrane une ultrafiltration.

9. Procédé selon l'une des revendications 1 à 8, caractérisé en ce que l'on mesure en continu pendant le dégraissage/nettoyage de surfaces métalliques qui doivent être galvanisées dans une étape subséquente, la tension superficielle dynamique du liquide de nettoyage et que l'on effectue lors du dépassement d'une valeur de mesure préindiquée, des mesures de conservation pour le liquide de nettoyage.

10. Procédé selon l'une des revendications 1 à 5, caractérisé en ce que l'on ajoute par portions en vue de la préparation d'une solution fraîche de nettoyage, l'agent de nettoyage en fonction de la valeur effective de la tension superficielle dynamique mesurée.

11. Procédé selon l'une des revendications 1 à 10, caractérisé en ce que l'on mesure dans un processus de rinçage consécutif au nettoyage/dégraissage, la tension superficielle dynamique de l'eau de rinçage et que l'on termine le rinçage lorsque la valeur de mesure dépasse une valeur maximale pré-indiquée.

12. Procédé selon l'une des revendications 1 à 11, caractérisé en ce que pour la détermination de la tension superficielle, la pression différentielle maximale de bulles, des bulles obtenues avec le tensiomètre à bulles est mesurée.

13. Procédé selon l'une des revendications 1 à 11, caractérisé en ce que l'on mesure pour la détermination de la tension superficielle la vitesse dans le temps des bulles qui s'écoulent du tensiomètre à bulles.

14. Procédé selon l'une des revendications 1 à 13, caractérisé en ce que les courants gazeux constants sont produits par régulation de courants gazeux variables ou à l'aide de pompes qui travaillent d'une manière régulière.

15. Procédé selon la revendication 14, caractérisé en ce qu'il s'agit pour les courants gazeux, de courants d'air.
